# EUROPEAN PATENT SPECIFICATION

(11) **EP 2 385 686 B1**
(45) Date of publication and mention of the grant of the patent: **11.04.2018**
(21) Application number: 10162222.3
(22) Date of filing: 06.05.2010
(51) Int. Cl.: H04M 1/24, H04M 1/60, H04R 29/00, H04M 1/725, H04N 21/41, H04N 21/43, H04N 21/436

(54) **Multimedia playback calibration methods, devices and systems**
Multimedia-Wiedergabekalibrierungsverfahren, Vorrichtungen und Systeme
Procédés d'étalonnage de lecture multimédia, dispositifs et systèmes

(43) Date of publication of application: 09.11.2011
(73) Proprietor: BlackBerry Limited, Waterloo, ON N2K 0A7 (CA)
(72) Inventor: Pattenden, Christopher, Waterloo Ontario N2L 5R9 (CA)
(74) Representative: Gill Jennings & Every LLP

(56) References cited:
- EP-A1- 1 503 567
- US-A- 6 115 476
- US-A1- 2002 146 136
- US-A1- 2005 282 580
- US-A1- 2009 060 446

## Description

The present disclosure relates to multimedia playback and more particularly, to a method, system and mobile device for calibrating playback of multimedia data streams.

Modern mobile communication devices are equipped with many sophisticated features including multimedia players and various built-in or external peripheral communications devices. Playback of audio and video data streams using such players and devices may take on an increasing number of configurations ranging from playback directly on a display on the mobile device itself with audio provided through a built-in speaker or a wired earphone to wireless communications of the video stream to large display monitors and of the audio stream to multi-channel speaker systems.

The wide variety of available configurations may involve significantly different data processing paths between data streams resulting in inefficient calibration of the playback path, including loss of synchronization between complementary data streams, which may in some circumstances be perceptible to a user of a mobile communication device.

United States Patent No. 6,115,476 issued September 5, 2000 to O'Conner et al. discloses a method and apparatus for monitoring an output signal from and modifying an input signal to an audio/video system. In one embodiment, the system response of said audio/video system is determined. After having established the system response, said output signal is modified according to system response such that said output signal is an optimal reproduction of said input signal.

United States Patent Application Publication No. 2009/0060446 published March 5, 2009 and filed by Holden et al. discloses a portable media device (PMD) which can produce an isochronous audio/video experience when the PMD provides a digital audio signal to the accessory while displaying analog video on an accessory-independent display. The accessory can communicate audio latency information to the PMD. The PMD can delay a video portion of a presentation, relative to providing the digital audio signal to the accessory, based on the audio latency information communicated by the accessory. As a result, the user may perceive an isochronous presentation of the audio and video portions of the presentation.

United States Patent Application Publication No. 2002/0146136 published October 10, 2002 and filed by Carter Jr. discloses a method of acoustic transducer calibration using a band limited pseudo random noise source with an internal digital signal processor to tailor audio characteristics of an internal microphone and internal speaker within a communications device to insure consistent amplitude and frequency characteristics of these microphone and speaker transducer devices. The method offers an advantage such that tuning of the amplitude and frequency response consistently converges to the desired filter response with a filter type offering operational stability.

United States Patent Application Publication No. 2005/0282580 published December 22, 2005 and applied for by Tuori et al. disclose a device (and corresponding system, method and computer program product) comprising at least a first control block, a second control block, a bus between the first control block and the second control block for transmitting information between the first control block and the second control block, an electro-acoustic converter adapted to the first control block for generating an audible signal on the basis of an audio frame, video presentation means for presenting video information on the basis of video frames, and a synchronizing parameter for synchronizing the presentation of video information to the presentation of audio information. The first control block is adapted to transmit a request message to the second control block for requesting an audio frame to be transmitted from the second control block to the first control block.

European Patent Application No. EP1 503 567 published February 2, 2005 and filed by Ono discloses a mobile phone terminal in which the sound, such as the audio, may be synchronized with moving picture even in case a sound processing until processing the sound, such as audio, is controlled by a controller differing from the controller controlling a moving picture processing unit processing the moving picture. The synchronization controlling method for a mobile phone terminal is also disclosed. A synchronization controller calculates a transmission time of a signal transmitted between an audio processing CPU and a moving picture processing CPU. The synchronization controller transmits an audio processing start signal, commanding the start of the audio processing, to the audio processing CPU through the moving picture processing CPU, and transmit, at a timing when the previously calculated transmission time has elapsed as from the transmission of the sound processing start signal, a moving picture processing start command signal, commanding the start of a moving picture processing, to the moving picture processing CPU.

Improvements in calibration methods and apparata for use by the mobile devices are desirable.

According to a first aspect of the invention, there is provided a multimedia playback calibration method as claimed in claim 1.

According to a second aspect of the invention, there is provided a mobile communication device as claimed in claim 9.

According to a third aspect of the invention, there is provided a computer program product as claimed in claim 15.
**FIGURE 1** is a block diagram illustrating a mobile communication device in accordance with one example embodiment of the present disclosure;
**FIGURE 2** is a block diagram illustrating a communication system including the mobile device of **Figure 1****,** in which example embodiments of the present disclosure can be applied;
**FIGURE 3** is a block diagram of an example media player module for use in the device of **Figure 1****;**
**FIGURE 4** is a block diagram of the media player module of **Figure 3** in conjunction with an example embodiment of a playback path between the device of **Figure 1** and an example playback device;
**FIGURE 5** is a block diagram of an example calibration module for use in the device of **Figure 1** in conjunction with the playback path of **Figure 4****;** and
**FIGURE 6** is a flowchart illustrating an example method of a calibration method in accordance with an example embodiment of the present disclosure.

Like reference numerals are used in the drawings to denote like elements and features.

The present disclosure provides an example embodiment of a multimedia playback calibration method comprising a calibration module (185) operating on a mobile communication device (100) for causing the mobile device (100) to perform the actions of: introducing (710) test data (520) at a first end (340), in the mobile device (100), of a first playback path(430); receiving (720) data (514), played back by a playback device (350,360) at a second end (460) of the first playback path (430), at a sensor (121) integral to the mobile device (100); comparing (730) the received data (514) against the test data (520) for determining a characteristic of the first playback path (430) relative to the characteristic of a second playback path; and configuring (740) the mobile device (100) and compensating for this characteristic.

The present disclosure also provides an example embodiment of a A mobile communication device (100) comprising: a handheld casing comprising: a central processing unit (105), a multimedia player module (183) for initiating playback of at least one data stream (312) on a playback device (360), communication means (145,153,155,170) for forwarding the at least one data stream (312) from the mobile device (100) to the playback device (360) along a first playback path (430), a first end (340), in the mobile device (100), of the first playback path (430) for introducing test data (520), a sensor integral to the mobile device (100) for receiving data (514) played back by the playback device (360) at a second end (460) of the first playback path (430), and_a calibration module (185) for comparing the received data (514) against the test data (520) for determining a characteristic of the first playback path (430); relative to the characteristic of a second playback path (465) and for configuring the mobile device (100) for compensating for this characteristic.

The present disclosure also provides an example embodiment of a computer program product comprising: a computer readable medium (130,135,140,190), and stored on the computer readable medium (130,135,140,190), computer-readable and computer-executable instructions in a calibration module (185), for execution by a central processing unit (105) of a mobile communication device (100), for implementing all of the method actions of any of claims 1 through 7.

The characteristic may be, in some example embodiments, a delay introduced in the playback path relative to a playback path of a complementary data stream, such as for corresponding audio and video streams from a multimedia file. The mobile device may be configured to compensate for such characteristic by ensuring that the delayed data stream is played in advance of the complementary data stream by an amount of time equal to the relative delay between them.

The characteristic may be, in some example embodiments, a degradation in the signal spectrum of the data stream as it is played back along the playback path. The mobile device may be configured to compensate for such characteristic by adjusting the equalization of the playback path to counteract such degradation.

The characteristic may be determined for a number of particular playback devices and the mobile device may be configured to compensate for such characteristic in respect of each such playback device.

In some example embodiments, the test data is audio data and the sensor is a microphone.

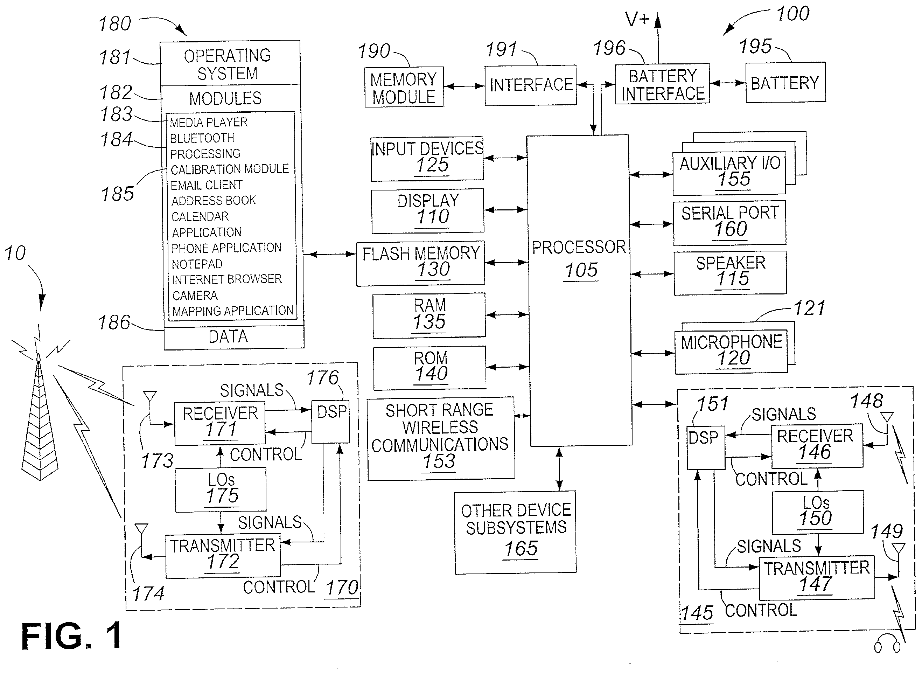

Reference is now made to **Figure 1****,** which illustrates a mobile device 100 in which example embodiments described in the present disclosure can be applied. The mobile device 100 is a media player with the ability to read multimedia data files 300 and to extract and process at least one data stream for output along a playback path to a corresponding playback device, which may be contained in the mobile device 100 or connected to the mobile device 100 by a communication capability available on the mobile device 100.

In some example embodiments, the mobile device 100 may be a two-way communication device having data and voice communication capabilities, and the capability to communicate with other computer systems, for example, via the Internet. Depending on the functionality provided by the mobile device 100, in various embodiments the device 100 may be a multiple-mode communication device configured for both data and voice communication, a smartphone, a mobile telephone or a personal digital assistant (PDA) enabled for wireless communication, or a computer system with a wireless modem.

The mobile device 100 includes a rigid case (not shown) housing the components of the device 100. The internal components of the device 100 are constructed in some example embodiments on one or more printed circuit boards (PCBs) and/or integrated circuits (ICs). The mobile device 100 includes a controller comprising at least one processor 105 (such as a microprocessor), which controls the overall operation of the device 100.

The processor 105 interacts with device subsystems including a display screen 110 such as a liquid crystal display (LCD) screen; speaker 115; a sensor 121 such as microphone 120; input devices 125 such as a keyboard and control buttons; flash memory 130; random access memory (RAM) 135; read only memory (ROM) 140; a Bluetooth™ communication subsystem 145; short-range wireless communication subsystem 153; auxiliary input/output (I/O) subsystems 155; a data port 160 such as a serial data port, or a Universal Serial Bus (USB) data port; other device subsystems generally designated as 165; and a wireless communication subsystem 170 or combinations thereof. In some example embodiments, the processor 105 interacts with a device subsystem such as a wireless communication subsystem 170 for exchanging radio frequency signals with a wireless network 10 to perform communication functions. Some of the subsystems shown in **Figure 1** provide "resident" or on-device functions whereas other subsystems may provide communication-related functions.

The processor 105 operates under stored program control and executes software modules 180 stored in memory such as persistent memory, for example, in the flash memory 130. As illustrated in **Figure 1****,** the software modules 180 comprise operating software 181 and software modules 182 comprising a media player module 183, a Bluetooth™ processing module 184 and a calibration module 185. Example embodiments of the media player module 183, Bluetooth™ processing module 184 and calibration module 185 will be discussed in detail later herein.

The software modules 180 may also include a variety of modules, including, for example, an e-mail messaging module (also referred to as an e-mail client), a personal address book module, a calendar module, a phone module, a notepad module, an Internet browser module, a camera module or a mapping module, or combinations thereof. Each of the software modules 180 may include layout information defining the placement of particular fields and graphic elements (*e.g.* text fields, input fields, icons, *etc*.) in the user interface (*i.e.* the display screen 110) according to the module.

A pre-determined set of modules that control basic device operations, including data and possibly voice communication may be installed on the mobile device 100 during or after manufacture. Additional modules or upgrades to the operating system 181 or software modules 182 may also be downloaded onto the mobile device 100 from the wireless network 10 through the wireless communication subsystem 170, the auxiliary I/O subsystem 155, the serial port 160, the Bluetooth™ communication subsystem 145, the short-range communication subsystem 153 or other suitable device subsystem 165.

The downloaded modules may be permanently installed, for example, written into the program memory (*i.e.* ROM 140, flash memory 130), or written into and executed from the RAM 135 for execution by the processor 105 at run-time. Such flexibility in installation increases the functionality of the mobile device 100 and may provide enhanced on-device functions, communication-related functions, or both.

The software modules 180, or parts thereof, may be temporarily loaded into volatile memory such as the RAM 135. The RAM 135 is used for storing run-time data variables and other types of data or information. Although specific functions are described for various types of memory, this is merely one example and different assignments of functions to types of memory could also be used.

The input devices 125, or alternatively the auxiliary I/O subsystems 155 may further comprise a pointing or navigational input device such as a clickable trackball or scroll wheel or thumbwheel. The auxiliary I/O subsystems 155 may also comprise a vibrator for providing vibratory notifications in response to various events on the mobile device 100 such as receipt of an electronic message or incoming phone call, or for other purposes such as haptic (touch) feedback.

In some example embodiments, the auxiliary I/O subsystems 155 may comprise wired or wireless communication interfaces or both. Wired communication interfaces may include, without limitation, an external communication link or interface, for example, an Ethernet connection, a speaker such as speaker 115, a serial port 160, such as a USB interface, a earphone jack for accepting a wired headset or earphone and audio /video cabling connections including, without limitation, two-wire, twisted pair, VGA, RCA, red green blue (RGB), composite video, RGB plus horizontal and vertical sync (RGBHV), component (YPbPr), digital visual interface (DVI) and high definition multimedia interface (HDMI) or combinations thereof.

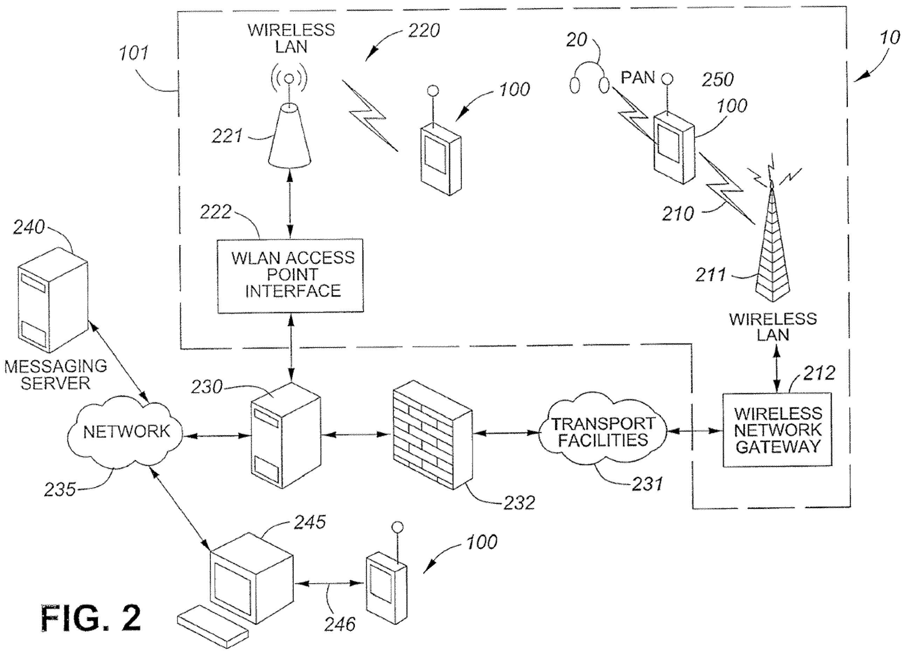

Wireless communication interfaces may include Bluetooth™ communications such as Bluetooth™ communication subsystem 145, short-range wireless communication subsystem 153 or wireless communication interfaces such as wireless communication subsystem 170 for communicating to a wireless communications network 10, which may comprise one or more of a Wireless Wide Area network (WWAN) 210 and a Wireless Local Area Network (WLAN) 220 or other suitable network arrangements as shown in **Figure 2** and as discussed below. In some example embodiments, the mobile device 100 is configured to communicate over both of the WWAN 210 and WLAN 220, and to roam between these networks. In some example embodiments, the wireless network 10 may comprise multiple WWANs 210 and WLANs 220.

The mobile device 100 may send and receive communication signals over the wireless network 10 along wireless communication subsystem 170 after appropriate network registration or activation procedures have been completed. Wireless communication subsystem 170 may comprise a receiver 171, a transmitter 172, and associated components, such as one or more antenna elements 173, 174, local oscillators (LOs) 175, and a processing module such as a digital signal processor (DSP) 176. The antenna elements 173, 174 may be embedded or internal to the mobile device 100, and a single antenna may be shared by both receiver and transmitter, by both the wireless communication subsystem 170 and other communication subsystems such as Bluetooth™ communication subsystem 145 and short-range wireless communication subsystem 153 or any combination thereof. The particular design of the wireless communication subsystem 170 depends upon the nature of the wireless network(s) 10 in which the mobile device 100 is intended to operate.

Signals received by the antenna 173 from the wireless network 10 are input to the receiver 171, which may perform such common receiver functions as signal amplification, frequency down-conversion, filtering, channel selection, *etc*., as well as analog-to-digital (A/D) conversion, which allows more complex communication functions such as demodulation and decoding to be performed by DSP 176.

In a similar manner, signals to be transmitted to the wireless network 10 are processed, including by modulation and encoding, for example, by DSP 176. Such DSP-processed signals are output to the transmitter 172, for digital-to-analog (D/A) conversion, frequency up-conversion, filtering, amplification and transmission to the wireless network 10 by antenna 174.

DSP 176 may, in addition to processing communication signals, provide for control of the receiver 171 and transmitter 172 or either of them, such as by adaptively controlling the gains applied to communication signals in the receiver 171 and transmitter 172 or either of them by automatic gain control algorithms implemented in the DSP 176.

The mobile device 100 may provide either or both of two principal modes of communication, namely a data communication mode and a voice communication mode. In the data communication mode, a received data signal such as a text message, an e-mail message or a Web page download will be processed by the communication subsystem 170 and input to the processor 105 for further processing including, without limitation, display on the display screen 110. A user of the mobile device 100 may also compose data items, such as a text message or an e-mail message using the input devices 125 and auxiliary I/O devices 155 or combinations thereof in conjunction with the display 110, for transmission through the wireless communication subsystem 170 over the wireless network 10.

In the voice communication mode, the mobile device 100 provides telephony functions and operates as a cellular phone. The overall operation is similar to the data communication mode except that the received signals may be output to the speaker 115 and signals for transmission may be received by a sensor 121 such as the microphone 120. The telephony functions may be provided by a combination of software/firmware such as the phone module and hardware such as the speaker 115, microphone 120, input devices 125 and wireless communication subsystem 170. Although voice or audio signal output is typically accomplished primarily through the speaker 115, the display screen 110 may be used to provide an indication of the identity of a calling party, duration of a voice call, or other voice call-related information. Alternative voice or audio I/O subsystems, such as a voice message recording subsystem, may be implemented on the mobile device 100.

Other types of wireless communication interfaces may include a receiver or transceiver (not shown) for communicating with a satellite positioning system such as the Global Positioning System (GPS).

The short-range communication subsystem 153 is an additional component which provides for communication between the mobile device 100 and different systems or devices, which need not necessarily be similar devices. The short-range communication subsystem 153 may include an infrared device and associated circuits and components, or a wireless bus protocol compliant communication mechanism such as a Bluetooth™ communication subsystem to provide for communication with similarly-enabled systems and devices.

The Bluetooth™ communication subsystem 145 is explicitly broken out for ease of description of example embodiments of this disclosure. In some example embodiments, it will have a similar architecture to that of the wireless communication subsystem 170, including a receiver 146, a transmitter 147, and associated components, such as one or more antenna elements 148, 149, local oscillators 150, and a processing module such as a digital signal processor 151. In some example embodiments, DSP 151 may be absent and its functionality performed by processor 105. The processing performed by the DSP 151 or the processor 105 or combinations thereof may comprise one or more functions of the Bluetooth™ processing module 184.

One or more of the antenna elements 148, 149, local oscillators 140 and DSP 151 may be the same and/or may operate in a similar fashion as corresponding components from the wireless communication subsystem 170 with the exception of operating frequency and transmission range. Bluetooth™ communications typically use operating frequencies in the range of 2.4000 to 2.4835 GHz, in three classes, having respective approximate communication ranges of 1, 10 and 100 metres. In some example embodiments, the mobile device 100 may support Bluetooth™ communications in the 10 metre range.

In some example embodiments, the components of the Bluetooth™ communication subsystem 145 may comprise one or more integrated circuits incorporating one or more functions of the Bluetooth™ processing module 184 including, without limitation, receive, transmit, processing and connection management functions, such as Bluetooth™ control or baseband conversion.

The Bluetooth™ communication subsystem 145 permits the mobile device 100 to act as a Bluetooth™-enabled component that may communicate with another Bluetooth™-enabled component such as Bluetooth™ headset 20. Two Bluetooth™-enabled components agree to communicate with one another through pairing, an activity initiated by one component in the proximity of the other component. Typically, in the context of the mobile device 100 and the Bluetooth™ headset 20, the pairing inquiry will be initiated by the mobile device 100. In response to such inquiry, the Bluetooth™ headset 20 will transmit information wirelessly to the mobile device 100 such as a device name, class, list of services and functions as well as other technical information such as the device manufacturer.

In some example embodiments, some or all of such information may be set out in a supported profile that specifies the supported applications and how such applications work, in order to ensure interoperability of devices. If profiles are supported, information about such profiles may be transmitted in place of the information itself during the pairing process. An example Bluetooth™ profile is the Advanced Audio Distribution Profile (A2DP) which defines how audio data may be streamed from one device to another.

Once Bluetooth™ components have been paired, a personal area network (PAN) 250 is created. A PAN is a wireless point to point connection, meaning no physical cables are used to connect the two end points.

In some example embodiments, the mobile device 100 includes a removable memory card or module 190 (which may comprise flash memory) and a memory card interface 191. Network communication access is typically associated with a subscriber or user of the mobile device 100 via the memory card 190, which may be a Subscriber Identity Module (SIM) card for use in a Global System for Mobile Communication (GSM) network or other type of memory card for use in the relevant wireless network type, or a separate memory card for user data storage or combinations thereof. The memory card 190 is inserted in or connected to the memory card interface 191 of the mobile device 100.

The mobile device 100 stores other data 186 in an erasable persistent memory, which in one example embodiment is the flash memory 130. In some example embodiments, the data 186 includes service data comprising information used by the mobile device 100 to establish and maintain communication with the wireless network 10. The data 186 may also include user application data such as e-mail messages, address book and contact information, calendar and schedule information, notepad documents, image files, multimedia data files and configuration data, as well as other commonly stored user information stored on the mobile device 100 by its user including, without limitation, Bluetooth™ pairing data and/or playback device calibration data, and other data. In addition, or alternatively, such user data 186 may be stored in a memory card 190.

The data 186 stored in the persistent memory of the mobile device 100 may be organized, at least partially, into a number of databases each containing data items of the same data type or associated with the same module 180.

The mobile device 100 also may include a battery 195 as a power source, which may in some example embodiments comprise one or more rechargeable batteries that may be charged, for example, through charging circuitry coupled to a battery interface 196 such as the serial data port 160. The battery 195 provides electrical power to at least some of the electrical circuitry in the mobile device 100, and the battery interface 196 is coupled to a regulator (not shown) which provides power V+ to the circuitry of the mobile device 100.

The WWAN 210 may be implemented as any suitable wireless access network technology. By way of non-limiting example the WWAN 210 may be implemented as a wireless network that includes a number of transceiver base stations 211 (one of which is shown in **Figure 2****)** where each of the base stations 211 provides wireless Radio Frequency (RF) coverage to a corresponding area or cell. The WWAN 210 is typically operated by a mobile network service provider that provides subscription packages to users of the mobile devices 100. In some embodiments, the WWAN 210 conforms to one or more of the following wireless network types: Mobitex Radio Network, DataTAC, GSM, General Packet Radio System (GPRS), Time Division Multiple Access (TDMA), Code Division Multiple Access (CDMA), Cellular Digital Packet Data (CPDP), Integrated Digital Enhanced Network (IDEN), Evolution-Data Optimized (EvDO), CDMA2000, Enhanced Data Rates for GSM Evolution (EDGE), Universal Mobile Telecommunications Systems (UMTS), High-Speed Downlink Packet Access (HSDPA), Worldwide Interoperability for Microwave Access (WiMAX, also referred to IEEE802.16e), Long Term Evolution (LTE), or various other networks. Although WWAN 210 is described as a "Wide-Area" network, that term is intended herein to also incorporate wireless Metropolitan Area Networks (WMAN) and other similar technologies for providing coordinated service wirelessly over an area larger than that covered by typical WLANs.

The WWAN 210 may further comprise a wireless network gateway 212 that connects the mobile devices 100 to transport facilities 231 and through the transport facilities 231 to a wireless connector system 230. Transport facilities may include one or more private networks or lines, the public internet, a virtual private network (VPN), or any other suitable network. The wireless connector system 230 may be operated, for example, by an organization or enterprise such as a corporation, university or governmental department, which allows access to a network 235 such as an internal or enterprise network and its resources, or the wireless connector system 230 may be operated by a mobile network provider. In some example embodiments, the network 235 may be realised using the Internet rather than an internal or enterprise network.

The wireless network gateway 212 provides an interface between the wireless connector system 230 and the WWAN 210, which facilitates communication between the mobile devices 100 and other devices (not shown) connected, directly or indirectly to the WWAN 210. Accordingly, communications sent via the mobile device 100 are transported via the WWAN 210 and the wireless network gateway 212 through transport facilities 231 to the wireless connector system 230. Communications sent from the wireless connector system 230 are received by the wireless network gateway 212 and transported via the WWAN 210 to the mobile devices 100.

The WLAN 220 comprises a wireless network which, in some embodiments, conforms to IEEE 802.11x standards (sometimes referred to as Wi-Fi) such as, for example, the IEEE 802.11a, 802.11b and/or 802.11g standards. Other communication protocols may be used for the WLAN 220 in other embodiments, such as, for example, IEEE 802.11n, IEEE 802.16e (also referred to as Worldwide Interoperability for Microwave Access or WIMAX), or IEEE 802.20 (also referred to as Mobile Wireless Broadband Access). The WLAN 220 includes one or more wireless RF access points (APs) 221 (one of which is shown in **Figure 2****)** that collectively provide a WLAN coverage area.

The WLAN 220 may be a personal network of the user, an enterprise network, or a hotspot offered by an internet service provider (ISP), a mobile network provider or a property owner in a public or semi-public area, for example. The access points 221 are connected to an access point interface 222 which may connect to the wireless connector system 230 directly (for example, if the access point 221 is part of an enterprise WLAN 220 in which the wireless connector system 230 resides), or indirectly via the transport facilities 231 if the access point 231 is a personal Wi-Fi network or Wi-Fi hotspot (in which case a mechanism for securely connecting to the wireless connector system 230, such as a virtual private network (VPN) may be appropriate). The AP interface 222 provides translation and routing services between the access points 221 and the wireless connector system 230 to facilitate communication, directly or indirectly, with the wireless connector system 230.

The wireless connector system 230 may be implemented as one or more servers, and is typically located behind a firewall 232. The wireless connector system 230 manages communications, including e-mail messages, to and from a set of managed mobile devices 100. The wireless connector system 230 also provides administrative control and management capabilities over users and mobile devices 100 which may connect to the wireless connector system 120.

The wireless connector system 230 allows the mobile devices 100 to access the network 235 and connected resources and services such as a messaging server 240. The wireless connector system 230 typically provides a secure exchange of data (*e.g*. e-mail messages, personal information manager (PIM) data, and instant messaging (IM) data) with the mobile devices 100.

The wireless network gateway 212 is adapted to send data packets received from the mobile device 100 over the WWAN 210 to the wireless connector system 230. The wireless connector system 230 then sends the data packets to the appropriate connection point such as the messaging server 240 or other servers (not shown). Conversely, the wireless connector system 230 sends data packets received, for example, from the messaging server 240 or other server (not shown) to the wireless network gateway 212 which then transmits the data packets to the destination mobile device 100.

The AP interface 222 of the WLAN 220 provides similar sending functions between the mobile device 100, the wireless connector system 230 and a network connection point such as the messaging server 240 or other server (not shown).

The network 235 may comprise a private local area network, metropolitan area network, wide area network, the public Internet or any combination thereof and may include virtual networks constructed using any of these, alone, or in combination. Computers 245 may be connected to the network 235 directly or indirectly via an intermediate communication network such as the Internet. When computers 245 connect to the network 235 indirectly, such as by the Internet, a VPN or other mechanism for securely connecting to the network 235 may be appropriate. Computers 245 may be of any suitable construction and include at least a processor and a display screen, one or more user input devices and a memory each connected to the processor. The computers 245 could be desktop computers, laptop/notebook/netbook computers, or any combination thereof, and may have wired or wireless communication subsystems for connecting to the network 235.

A mobile device 100 may alternatively connect to the wireless connector system 230 using a computer 245 via the network 235. In at least some example embodiments, for security purposes, the computers 245 with which the mobile devices 100 can connect to the wireless connector system 230 are limited to computers 245 which are directly connected to the network 235. A link 246 may be provided for exchanging information between the mobile device 100 and the computer 245 connected to the wireless connector system 230. The link 246 may comprise one or both of a physical interface and short-range wireless communication interface. The physical interface may comprise one or combinations of an Ethernet connection, serial port 160 such as a USB connection, Firewire™ (also known as an IEEE 1394 interface) connection, or other serial data connection, via respective ports or interfaces of the mobile device 100 and computer 245. The short-range communication interface may be a PAN interface such as Bluetooth™ communications subsystem 145 or short-range wireless communications subsystem 153.

The above-described communication system is provided for the purpose of example and illustration only, and that the above-described communication system comprises one possible communication network configuration of a multitude of possible configurations for use with the mobile devices 100. The teachings of the present disclosure may be employed in connection with any other type of network and associated devices that are effective in implementing or facilitating wireless communication. Other suitable variations of the communication system will become apparent and are intended to fall within the scope of the present disclosure.

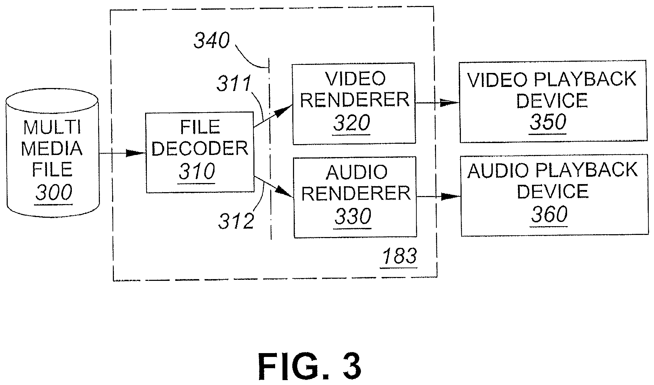

The media player module 183 is a software module that takes a multimedia data file 300, such as may be stored in persistent memory such as flash memory 130 or a memory module 190, extracts one or more data streams from it, which may, in some example embodiments comprise a video data stream 311 or an audio data stream 312 or combinations thereof. The media player module 183 processes them for playback on respective audio playback devices 360 or video playback devices 350, which may be integral to the mobile device 100 or external to it as illustrated in **Figure 3****.** Audio playback devices 360 may include in some example embodiments: speaker 115; external I/O devices for wired connection through the auxiliary I/O subsystem 155 such as an external speaker or audio system; external I/O devices for wireless connection through the Bluetooth™ communication subsystem 145 such as Bluetooth™ headset 20; or external I/O devices for wireless connection through the short-range wireless communication subsystem 153 such as an infrared connected device (not shown). Video playback devices 350 may include: display 110; external I/O devices for wired connection through the auxiliary I/O subsystem 155 such as an external monitor or video system; external I/O devices for wireless connection through the Bluetooth™ communication subsystem 145 such as a Bluetooth™ display component (not shown); or external I/O devices for wireless connection through the short-range wireless communication subsystem 153 such as an infrared connected device (not shown). In some example embodiments, the playback device 350, 360 may be integral to the mobile device 100, such as display 110 or speaker 115.

The multimedia data file 300 may in some example embodiments, be in digital form, with the result that the extracted video data stream 311 and audio data stream 312 are digital data streams.

The media player module 183 may in some example embodiments contain software embodying one or more functions, including file decoder 310, video render 320 and audio render 330.

The file decoder function 310 causes the processor 105 to decode or separate the multimedia file 300 into its constituent data streams, such as a video data stream 311 and an audio data stream 312 for playback on the respective video playback path 435 and audio playback path 430. In some example embodiments, where the multimedia data file 300 is in analog rather than digital form, the file decoder function 310 may incorporate analog to digital (A/D) conversion processing to generate digital data streams. Such A/D processing may employ one or more hardware A/D converters (ADCs) (not shown).

(As described herein, each data stream undergoes certain processing and transformation as it travels along a playback path from the file decoder function 310 on the mobile device 100 until it is played back by a playback device. For purposes of explanation of the described example embodiments only, the data stream is commonly referred to a data stream, irrespective of any processing and transformation that may be performed and which may, in some aspects, be seen to alter the form or character of the data stream, for example, between baseband and RF or between analog and digital forms.)

The video renderer function 320 causes the processor 105 to process the video data stream 311 at least partially into a format suitable for display by a video playback device 350.

The audio renderer function 330 causes the processor 105 to process the audio data stream 312 at least partially into a format suitable for display by an audio playback device 360. The format of the audio data stream 312 in some example embodiments, may be raw audio data.

At a first end of each of the video playback path 435 and audio playback path 430, corresponding to the output of the processing of each of the video data stream 311 and the audio data stream 312 and shown representationally at 340, the data streams are synchronized for playback. This is typically irrespective of whether the multimedia data file 300 is a file comprising both video data stream 311 and audio data stream 312, such as a movie, or a plurality of separate files for simultaneous playback, such as may be the case with an audio track such as a song and an accompanying text file that may contain the lyrics of the song for simultaneous playback such as in an example karaoke embodiment.

However, depending upon the nature of the respective video playback device 350 and audio playback device 360 and the processing to be performed on the corresponding video data stream 311 and audio data stream 312, synchronization may be lost along the playback path. If the lack of synchronization is discernable, such as when the relative delay is greater than substantially about 20 ms to 30 ms, user enjoyment of the playback of the multimedia data file 300 may become impaired.

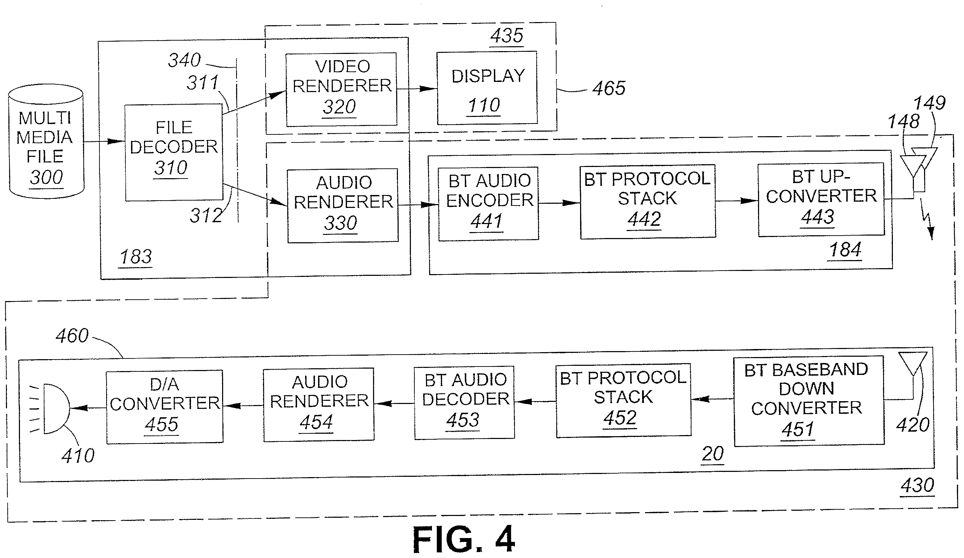

This may be demonstrated by an example embodiment shown as **Figure 4** in which the video playback device 350 is the internal display screen 110 of the mobile device 100, and the audio playback device 360 is a Bluetooth™ headset 20, shown representationally as having one or more speakers 410 and at least one antenna element 420. The audio playback path, shown in phantom at 430, includes, together with the audio renderer function 330 of the media player module 180, functional blocks associated with the Bluetooth™ processing module 184, which makes use of components of the Bluetooth™ communication subsystem 145 in the mobile device 100 and functional blocks associated with software / firmware in the Bluetooth™ headset 20.

In the example embodiment shown in **Figure 4****,** the Bluetooth™ headset 20 acts as the audio playback device 360. In order for the Bluetooth™ headset 20 to be able to receive and process the audio data stream 312 output by the audio renderer function 330, the audio data stream 312 is initially processed by the Bluetooth™ processing module 184.

The Bluetooth™ processing module 184 may in some example embodiments contain software embodying certain functions, including one or more of a Bluetooth™ audio encoding function 441, a Bluetooth™ protocol stack function 442 and a function for upconversion from baseband to a Bluetooth™ frequency 443. In some example embodiments, one or more functions of the Bluetooth™ processing module 184 may be undertaken by the DSP 151 of the Bluetooth™ communication subsystem 145 or the processor 105 or combinations thereof.

The audio data stream 312 comprising raw audio data generated by the audio renderer function 330 of the media player module 183 is received by the Bluetooth™ audio encoder function 441, which encodes it for transmission to the Bluetooth™ headset 20. The specific encoding format employed may be selected from among the various audio formats that may be supported by both the Bluetooth™ headset 20 and the mobile device 100. Such audio formats may include, without limitation, MPEG-1 Audiolayer 3 (MP3), SubBand coding (SBC) or Advanced Audio Coding (AAC). The A2DP profile mandates that the mobile device 100 and the Bluetooth™ headset 20 supporting the A2DP profile each support at least the SBC audio format.

The Bluetooth™ protocol stack function 442 is a software implementation of a suite of computer networking protocol modules for implementing the Bluetooth™ standard. A protocol module typically interacts with a higher-level and lower-level module, the lowermost module interacting physically with the hardware and the uppermost layer interacting with a user application. The protocol modules can thus be imagined as a stack of such protocol modules.

The appropriate protocol module in the Bluetooth™ protocol stack function 442 receives the encoded audio data stream 312 and processes it for transmission to the Bluetooth™ headset 20 by *inter alia* making one or more calls to lower-level protocol modules in the Bluetooth™ protocol stack function 442.

The result of the processing by the Bluetooth™ protocol stack function 442 is forwarded to the Bluetooth™ upconversion function 443, which translates the resulting audio data stream 312 from baseband (or in some example embodiments, an intermediate frequency) to the appropriate Bluetooth™ frequency.

The Bluetooth™ upconversion function 443 thereafter forwards the upconverted audio data stream 312 to the transmitter 147 of the Bluetooth™ communication subsystem 145 for wireless transmission by antenna element 149 through the PAN 250 to the Bluetooth™ headset 20.

This wireless signal is received by the Bluetooth™ headset 20 at its associated antenna element 420 and processed by one or more functions of the Bluetooth™ headset 20, which may be defined in software / firmware on the headset 20 and executed on a processor (not shown) therein. These functions may, in some example embodiments, include one or more of a Bluetooth™ baseband downconversion function 451, a Bluetooth™ protocol stack function 452, a Bluetooth™ audio decoder function 453, an audio rendering function 454 and a digital/analog (D/A) processing function 455.

The Bluetooth™ baseband downconversion function 451 translates the received audio data stream 312 down from its Bluetooth™ frequency to baseband or in some example embodiments, an intermediate frequency (collectively "baseband") for ease of processing.

The Bluetooth™ baseband downconversion function 451 thereafter forwards the baseband audio data stream 312 to the Bluetooth™ protocol stack function 452. The Bluetooth™ protocol stack function 452 is similar in terms of structure and functionality to the Bluetooth™ protocol stack function 442 in that the appropriate protocol module in the Bluetooth™ protocol stack function 452 receives the baseband audio data stream 312 and processes it for decoding and playback by *inter alia* making one or more calls to lower-level protocol modules in the Bluetooth™ protocol stack function 452.

The result of the processing by the Bluetooth™ protocol stack function 452 is forwarded to the Bluetooth™ audio decoder 453. The particular Bluetooth™ encoding format employed by the Bluetooth™ audio encoder function 441 is decoded by the Bluetooth™ audio decoder function 453 into raw audio data for processing by the audio renderer 454. The specific encoding format employed may be selected from among the various audio formats that may be supported by both the Bluetooth™ headset 20 and the mobile device 100. Such audio formats may include, without limitation, MP3, SBC or AAC. The A2DP profile mandates that the mobile device 100 and the Bluetooth™ headset 20 exchanging such profile each support at least the SBC audio format.

The audio renderer function 454 receives the raw audio data stream 312 generated by the Bluetooth audio decoding function 453 and processes into a digital format suitable for playback by the speaker 410 of the Bluetooth™ headset 20.

In some example embodiments, for example where the audio data stream 312 extracted by the file decoding function 310 of the media player module 183 is encoded in the MP3 audio format and the Bluetooth™ headset 20 recognizes and handles the MP3 format, some or all of the audio renderer function 330 of the media player module 183; the Bluetooth™ audio encoder function 441 of the Bluetooth™ processing module 184; the Bluetooth™ audio decoder function 453 of the module 184; and the audio renderer function 454 of the Bluetooth™ headset 20 may be dispensed with.

In any event, the digital audio data stream 312 is converted from digital to analog format to produce an analog signal for playback on the speaker 410. Such D/A processing may employ one or more hardware D/A converters (DACs) (not shown).

Thus, it may be seen that there may be a number of processing steps or stages along the audio playback path 430 that may result in loss of synchronization between the audio data stream 312 and the video data stream 311. Depending upon the amount of processing by the audio playback path 430, relative to the video playback path 435, playback of the audio data stream 312 at the audio playback device 360, which constitutes a second end of the audio playback path 430, may be delayed, or in some example embodiments, accelerated, relative to playback of the video data stream 311 at the video playback device 350. The video playback device 350 constitutes a second end of the video playback path 435.

Additionally, within a given playback path, the number of processing steps may result, even if the processing is performed digitally, in degradation of the data stream being processed.

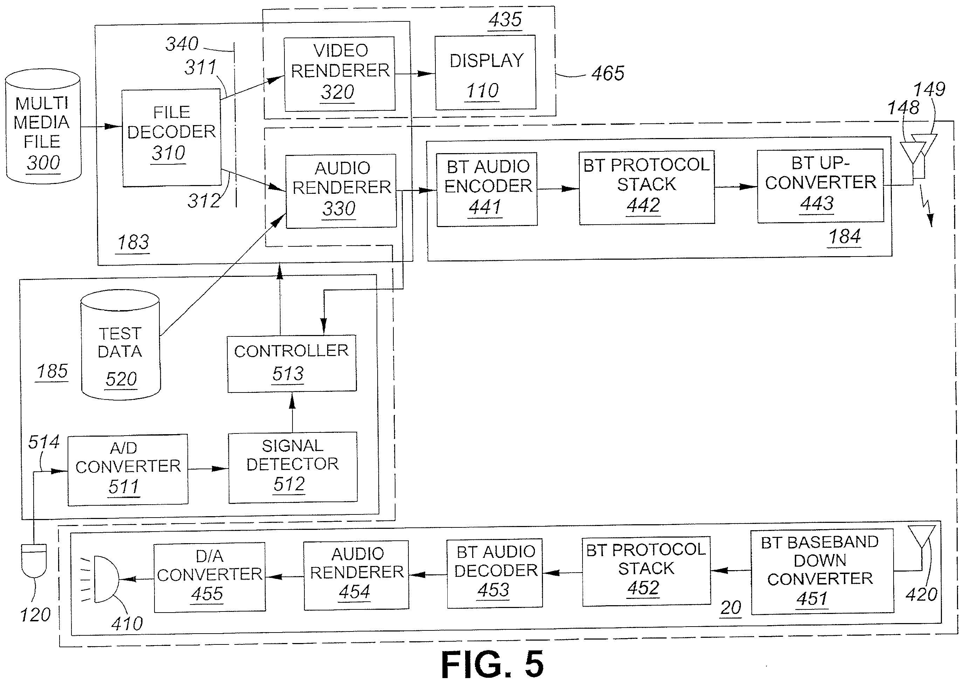

The calibration module 185 as illustrated in **Figure 5** enables the mobile device 100 to determine one or more characteristics of a playback path, for example, processing delay or signal degradation, when the media player 183 is not in use, in order that measures may be taken by the mobile device 100 during playback of the data stream to compensate for such characteristics of the playback path. Once determined, these characteristics may be stored in persistent memory on the mobile device 100, or otherwise retained, in some example embodiments in association with a particular playback device, and retrieved by the mobile device 100 to allow it to compensate for such characteristic when playing back a multimedia data file 300 on such playback device.

The calibration module 185 makes use of a sensor 121 integral to the mobile device 100, such as microphone 120. Additionally, the calibration module 185 has associated with it, one or more files of test data 520, such as may be stored in persistent memory such as flash memory 130 or a memory module 190. In some example embodiments, the data content in the test data file 520 may be configured to facilitate detection of playback of the test data file 520 or a specific portion thereof by the integral sensor 121.

There may in some example embodiments be different test data 520 for different types of playback devices. For example, test data 520 for an audio playback device 360 such as Bluetooth™ headset 20 may be an audio file containing an audio data stream 312 having a discernable pattern such as monotonically increasing frequency across the audible frequency range and/or amplitude or a fixed frequency for a fixed period of time. A non-limiting example of fixed frequency test data 520 may be a 1 KHz tone for 0.1s. For a video playback device 350 such as display 110, example test data 520 may be a file containing a video data stream 311 having a video test pattern and/or an easily discernable change in illumination that may facilitate detection by the integral sensor 121.

The calibration module 185 may, in some example embodiments, contain software embodying certain functions, including one or more of an A/D processing function 511, a signal detection function 512 and a calibration controller function 513 or combinations thereof.

The A/D processing function 511 receives data 514 received by the sensor 121 such as microphone 120 and converts the data 514 into digital form. In some example embodiments, the integral sensor 121 may receive and/or pass on the received data 514 in digital form, in which case the A/D processing function may be dispensed with. In any event, the received digital data 514 is fed into the signal detector function 512.

The signal detector function 512 processes the received data 514 to identify a predetermined signal in the received data 514 for forwarding to the calibration controller function 513. The nature of the predetermined signal will vary according to the type of characteristic under investigation, the type of playback device and the type of integral sensor 121 being employed by the calibration module 185.

By way of non-limiting example, as shown in **Figure 4****,** if the playback path characteristic is the processing delay imparted to the audio data stream 312 as it travels along the audio playback path 430 to the Bluetooth™ headset 20 as the audio playback device 360, the integral sensor 121 may be the microphone 120. The test data 520 may in such example, as suggested above, comprise a monotonically increasing frequency across the audible frequency range for a fixed period of time. In such a scenario, the predetermined signal may be a particular frequency in the midrange of the frequency range, for example, 1 kHz. When this predetermined signal is detected by the signal detector function 512, the signal detector function 512 forwards the received data 514, with the detected signal marked, to the calibration controller function 513. The controller 513 is also informed of the start of the test file playback so that a delay can be calculated as described in detail below.

By way of a second non-limiting example, if the characteristic is the processing delay imparted to the video data stream 311 as it travels along the video playback path 435 to the display 110 as the video playback device 350, the integral sensor 121 may be a light intensity detector (not shown). The test data 520 may in such example comprise a video test pattern having monotonically increasing amplitude for a fixed period of time. In such a scenario, the predetermined signal may be a particular intensity level. When a signal of such intensity is detected by the integral sensor 121, the signal detector function 512 forwards the received data 514, with the detected signal marked, to the calibration controller function 513.

By way of a third non-limiting example, if the characteristic is the signal degradation imparted to the audio data stream 312 as it travels along the audio playback path 430 to the Bluetooth™ headset 20 as the audio playback device 360 and the integral sensor 121 may be the microphone 120. The test data 520 in such example may be the above-described monotonically increasing frequency across the audible frequency range for a fixed period of time and, the predetermined signal may be the entire received data 514, which is forwarded by the signal detector function 512 to the calibration controller function 513 for processing.

The calibration controller function 513 controls the operation of the calibration module 185. It performs one or more of the following functions. First, the calibration controller function 513 causes the media player 183 to extract the test data 520 and introduce it as and for one of the data streams into an appropriate playback path. In **Figure 5****,** the calibration controller function 513 is shown to cause the test data 520 to be introduced as the audio data stream 312 to the audio renderer function 330 of the media player module 183. In some example embodiments, such as the second non-limiting example discussed above, the calibration controller function 513 may cause the test data 520 to be introduced as the video data stream 311 to the video renderer function 320 of the media player module 183, or combinations thereof.

Second, the calibration controller function 513 may in some example embodiments receive a signal comprising the test data 520 from the media player module 183 complementary to the detected predetermined signal. In **Figure 5****,** the calibration controller function 513 is shown to cause the audio renderer function 330 of the media player module 183 to return the signal from its output audio data stream 312. In some example embodiments, such as the second non-limiting example discussed above, the calibration controller function 513 may cause the video renderer 320 to return the signal from its output video data stream 311 or combinations thereof.

Third, the calibration controller function 513 receives the received data 514, which may be marked with the detected predetermined signal from the signal detector function 512. Fourth, the calibration controller function 513 may provide some configuration and/or control functionality for the operation of the other functional blocks of the calibration module 185.

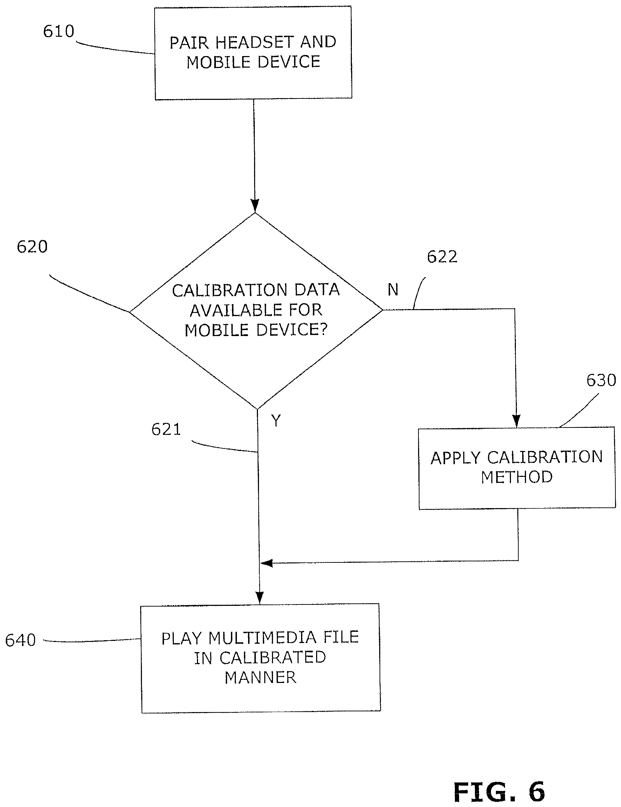

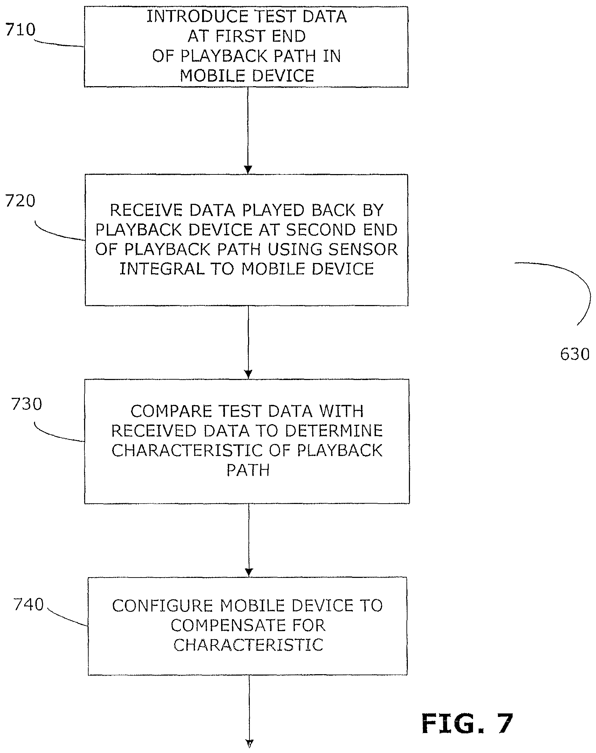

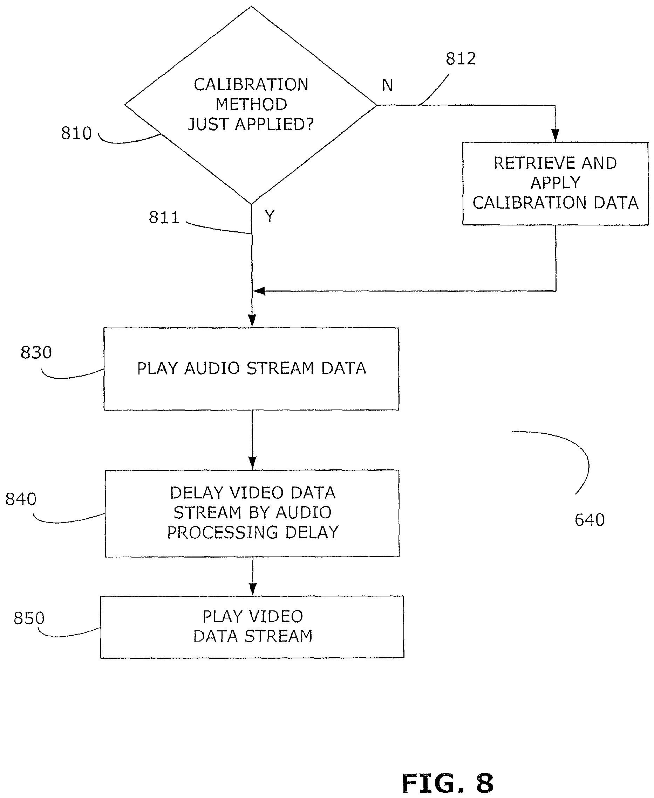

An example embodiment of a calibration method is described in **Figure 6****.** It includes, at action 610, a calibration module 185 operating on a mobile communication device 100 causing the mobile device 100 to introduce test data 520 at a first end 340, in the mobile device 100, of a playback path 430, 435. Action 620 causes the mobile device 100 to receive data 514, played back by a playback device 350, 360 at a second end 460, 465 of the playback path 430, 435, at a sensor 121 integral to the mobile device 100. Action 630 causes the mobile device 100 to compare the received data 514 against the test data 520 to determine a characteristic of the playback path 430, 435. Action 640 causes the mobile device 100 to configure the mobile device 100 to compensate for this characteristic.

The method may also include positioning the mobile device 100 with the integral sensor 121 proximate to the second end 460, 465 of the playback path 430, 435. This is facilitated by the portable nature of the mobile device 100 and obviates the use of any external cabling or connections by the calibration module 185 which may introduce delays or signal processing or degradation or combinations thereof that may impair the calibration process.

In such method, the playback path 430, 435 may be a signal path extending between a component 310 of the mobile device 100 that introduces the data 311, 312 and a component 410, 110 of the playback device 350, 360 that outputs the data 311, 312. In some example embodiments, the playback path may comprise a wireless connection between the mobile device 100 and the playback device 350, 360. Such wireless connection may be a Bluetooth™ connection and an infrared connection.

In this case of a playback device, such as display 110, being integral to the mobile device 100, the mobile device 100 can in some embodiments act as both a mobile device/device starting the playback of data and a playback device, and the characteristic of the playback path 435 may be determined during manufacture or resting.

The action 640 of configuring the mobile device 100 may include storing on the mobile device 100, data regarding the playback path characteristic. Such data may be stored in persistent memory such as flash memory 130 or a memory module 190, or non-persistent memory such as RAM 135. In some example embodiments, different playback devices 350, 360 may be employed, resulting in different playback paths 430, 435. Accordingly, the action 640 of configuring the mobile device 100 may include associating the data regarding the characteristic with the playback device 350, 360 employed in the calibration method, such as, by way of non-limiting example, by associating characteristics and/or storing them with MAC addresses of a given playback device.

The method may include a further action of compensating for the characteristic of the playback path 430, 435 when transmitting data 311, 312 from the mobile device 100 at the first end 340 of the playback path 430, 435 for playback at the second end 460, 465 thereof by the playback device 350, 360.

In some example embodiments, the action of compensating may involve adjusting a signal spectrum of the data 311, 312 to account for a signal degradation imparted to the test data 514 along the playback path 430, 435.

The action of compensating may in some example embodiments include accelerating the transmission of the data 300 from the mobile device 100 by an amount equal to a processing delay time of the playback path 430, 435. In some example embodiments, this may involve delaying transmission, from the mobile device 100, at the first end 340 of an alternative playback path 435, 430 for playback at the second end 465, 460 thereof by a second playback device 360, 350, of alternative data 312, 311 to be synchronized with the data 311, 312, by an amount equal to the processing delay of the playback path 430, 435.

Test calibrations were conducted according to the method and system described above with the speaker 397 of the headset 396 located approximately 2cm from the microphone 235 of the mobile device 100. Using a mobile device 100 comprising a Blackberry™ 9300 model manufactured by Research In Motion Limited, and headset 396 comprising a Blackberry model 655+ device, sold by Research In Motion Limited, a delay of 250ms was measured including an audio propagation delay of about 6 µs between the speaker 297 and the microphone 235. Test calibration of a Blackberry 8900 model and the Blackberry 655+, headset resulted in a 150ms audio delay. Testing of a Blackberry 8350 device and the Blackberry 655+ headset resulted in a 200ms audio delay. Thus, significant variations in delay, which would be appreciable to human sight and sound, may be encountered with various combinations of devices 100 and headsets 396.

While the present disclosure is sometimes described in terms of methods, the present disclosure may be understood to be also directed to various apparata including components for performing at least some of the aspects and features of the described methods, be it by way of hardware components, software or combinations thereof, or in any other manner. Moreover, an article of manufacture for use with the apparatus, such as a prerecorded storage device or other similar computer-readable medium including program instructions recorded thereon or a computer data signal carrying computer readable program instructions may direct an apparatus to facilitate the practice of the described methods. Such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM) (135), a read-only memory (ROM) (140), an erasable programmable-read-only memory (EPROM) or flash memory (130), an optical disc such as a Compact Disc (CD), Digital Versatile Disc (DVD) or Blu-ray™ Disc, and a solid state storage device (190) (e.g., NAND flash or synchronous dynamic RAM (SDRAM)).

The various embodiments presented herein are merely examples and are in no way meant to limit the scope of this disclosure. Variations of the innovations described herein will become apparent from consideration of this disclosure and such variations are within the intended scope of the present disclosure. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and sub-combination will become readily apparent upon review of the present disclosure as a whole. The subject matter described herein and in the recited claims intends to cover and embrace all suitable changes in the technology.

## Claims

1. A multimedia playback calibration method comprising a calibration module (185) operating on a mobile communication device (100) for causing the mobile device (100) to perform the actions of:
introducing (710) test data (520) at a first end (340), in the mobile device (100), of a first playback path(430), the first playback path (430) for playback of a first data stream (312);
receiving (720) data (514), played back by a first playback device (360) at a second end (460) of the first playback path (430), at a sensor (121) integral to the mobile device (100);
comparing (730) the received data (514) against the test data (520) for determining a characteristic of the first playback path (430) relative to a characteristic of a second playback path (435), the second playback path (435) for playback of a second data stream (311), complementary to the first data stream (312); and
configuring (740) the mobile device (100) and compensating for the characteristic of the first playback path (430) relative to the second playback path (435).

2. The method according to claim 1, wherein the first playback path (430) comprises a signal path extending between a component (330) of the mobile device (100) that introduces the test data (520) and a component (410) of the playback device (360) that outputs the test data (520).

3. The method according to claim 2, wherein the first playback path (430) comprises a wireless connection between the mobile device (100) and the playback device (360), wherein optionally, the wireless connection is selected from a group consisting of a Bluetooth™ connection and an infrared connection.

4. The method according to any preceding claim, wherein the action of configuring (740) comprises associating data regarding the characteristic with the playback device.

5. The method according to any preceding claim, wherein the characteristic of the first playback path (430) is a processing delay time of the first playback path (430) and the characteristic of the second playback path (435) is a processing delay time of the second playback path (435)..

6. The method according to any preceding claim, further comprising the action of compensating for the characteristic of the first playback path (430) when transmitting data (312) from the mobile device (100) at the first end (340) of the first playback path (430) for playback at the second end (460) thereof by the playback device (360).

7. The method of any preceding claim, wherein one of the first data stream (312) and the second data stream (311) comprises audio data and the other of the first data stream (312) and the second data stream (311) comprises video data for concurrent playing with the audio data.

8. The method of any preceding claim, wherein the first data stream (311) is played back by the first playback device (360) and the second data stream is played back by a second playback device (350).

9. A mobile communication device (100) comprising:
a handheld casing comprising:
a central processing unit (105),
a multimedia player module (183) for initiating playback of a first data stream (312) on a first playback device (360),
communication means (145,153,155,170) for forwarding the first data stream (312) from the mobile device (100) to the first playback device (360) along a first playback path (430), the first playback path (430) for playback of a first data stream (312);
a first end (340), in the mobile device (100), of the first playback path (430) for introducing test data (520),
a sensor integral to the mobile device (100) for receiving data (514) played back by the playback device (360) at a second end (460) of the first playback path (430), and
a calibration module (185) configured to compare the received data (514) against the test data (520) for determining a characteristic of the first playback path (430) relative to a characteristic of a second playback path (435), the second playback path (435) for playback of a second data stream (311), complementary to the first data stream (312),
the calibration module (185) further configured to configure the mobile device (100) to compensate for the characteristic of the first playback path (430) relative to the second playback path (435).

10. The mobile communication device (100) according to claim 9, wherein at least one of the following applies;
a. the calibration module (185) comprises a calibration controller (513);
b. the calibration module (185) comprises a signal detector (512) for identifying a predetermined signal in the received data (514) relevant to the characteristic of the first playback path (430); and
c. the calibration module (185) is configured to introduce the test data (520) at the media player module (183) as the at least one data stream (312).

11. The mobile communication device (100) according to claim 9 or claim 10, wherein the characteristic is a feature selected from a group consisting of a processing delay time of the first playback path (430) and a signal degradation imparted to the test data (520) along the first playback path (430).

12. The mobile communication device (100) according to claim 11, the mobile device (100) for accelerating the transmission of the data (312) from the mobile device (100) by an amount equal to a processing delay time of the first playback path (430) under the direction of the calibration module (185).

13. The mobile communication device (100) of any of claims 9 to 12, wherein one of the first data stream (312) and the second data stream (311) comprises audio data and the other of the first data stream (312) and the second data stream (311) comprises video data for concurrent playing with the audio data.

14. The mobile communication device (100) of any of claims 9 to 13, wherein the first data stream (311) is played back by the first playback device (360) and the second data stream is played back by a second playback device (350).

15. A computer program product comprising:
a computer readable medium (130,135,140,190), and
stored on the computer readable medium (130,135,140,190), computer-readable and computer-executable instructions in a calibration module (185), for execution by a central processing unit (105) of a mobile communication device (100), for implementing the method actions of any of claims 1 through 8.

## Patentansprüche

1. Multimedia-Wiedergabekalibrierungsverfahren, das ein Kalibrierungsmodul (185) umfasst, das auf einer Vorrichtung für mobile Kommunikation (100) arbeitet, um zu bewirken, dass die mobile Vorrichtung (100) folgende Aktionen ausführt:
Einführen (710) von Testdaten (520) an einem ersten Ende (340), in der mobilen Vorrichtung (100), eines ersten Wiedergabepfads (430), wobei der erste Wiedergabepfad (430) der Wiedergabe eines ersten Datenstroms (312) dient;
Empfangen (720) von Daten (514), die durch eine erste Wiedergabevorrichtung (360) an einem zweiten Ende (460) des ersten Wiedergabepfads (430) wiedergegeben werden, an einem Sensor (121), der integral in der mobilen Vorrichtung (100) gebildet ist;
Vergleichen (730) der empfangenen Daten (514) mit den Testdaten (520) zum Bestimmen einer Eigenschaft des ersten Wiedergabepfads (430) relativ zu einer Eigenschaft eines zweiten Wiedergabepfads (435), wobei der zweite Wiedergabepfad (435) zur Wiedergabe eines zweiten Datenstroms (311) dient, der komplementär zu dem ersten Datenstrom (312) ist; und
Konfigurieren (740) der mobilen Vorrichtung (100) und Kompensieren der Eigenschaft des ersten Wiedergabepfads (430) relativ zu dem zweiten Wiedergabepfad (435).

2. Verfahren nach Anspruch 1, wobei der erste Wiedergabepfad (430) einen Signalpfad umfasst, der sich zwischen einer Komponente (330) der mobilen Vorrichtung (100), die die Testdaten (520) einführt, und einer Komponente (410) der ersten Wiedergabevorrichtung (360), die die Testdaten (520) ausgibt, erstreckt.

3. Verfahren nach Anspruch 2, wobei der erste Wiedergabepfad (430) eine drahtlose Verbindung zwischen der mobilen Vorrichtung (100) und der ersten Wiedergabevorrichtung (360) umfasst, wobei optional die drahtlose Verbindung aus einer Gruppe ausgewählt ist, die aus einer Bluetooth™-Verbindung und einer Infrarotverbindung besteht.

4. Verfahren nach einem der vorhergehenden Ansprüche, wobei die Aktion des Konfigurierens (740) das Zuordnen von Daten bezüglich der Eigenschaft zu der Wiedergabevorrichtung umfasst.

5. Verfahren nach einem der vorhergehenden Ansprüche, wobei die Eigenschaft des ersten Wiedergabepfads (430) eine Verarbeitungsverzögerungszeit des ersten Wiedergabepfads (430) ist und die Eigenschaft des zweiten Wiedergabepfads (435) eine Verarbeitungsverzögerungszeit des zweiten Wiedergabepfads (435) ist.

6. Verfahren nach einem der vorhergehenden Ansprüche, das ferner die Aktion des Kompensierens der Eigenschaft des ersten Wiedergabepfads (430) beim Übertragen von Daten (312) von der mobilen Vorrichtung (100) an dem ersten Ende (340) des ersten Wiedergabepfads (430) zur Wiedergabe an dem zweiten Ende (460) davon durch die Wiedergabevorrichtung (360) umfasst.

7. Verfahren nach einem der vorhergehenden Ansprüche, wobei einer des ersten Datenstroms (312) und des zweiten Datenstroms (311) Audiodaten umfasst und der andere des ersten Datenstroms (312) und des zweiten Datenstroms (311) Videodaten zur gleichzeitigen Wiedergabe mit den Audiodaten umfasst.

8. Verfahren nach einem der vorhergehenden Ansprüche, wobei der erste Datenstrom (311) von der ersten Wiedergabevorrichtung (360) wiedergegeben wird und der zweite Datenstrom von einer zweiten Wiedergabevorrichtung (350) wiedergegeben wird.

9. Vorrichtung für mobile Kommunikation (100), die umfasst:
ein handgehaltenes Gehäuse, das umfasst:
eine zentrale Verarbeitungseinheit (105),
ein Multimedia-Wiedergabemodul (183) zur Initiierung der Wiedergabe eines ersten Datenstroms (312) auf einer ersten Wiedergabevorrichtung (360),
eine Kommunikationseinrichtung (145, 153, 155, 170) zum Weiterleiten des ersten Datenstroms (312) von der mobilen Vorrichtung 100) an die erste Wiedergabevorrichtung (360) entlang einem ersten Wiedergabepfad (430), wobei der erste Wiedergabepfad (430) der Wiedergabe eines ersten Datenstroms (312) dient;
ein erstes Ende (340), in der mobilen Vorrichtung (100), des ersten Wiedergabepfads (430) zur Einführung von Testdaten (520),
einen integral in der mobilen Vorrichtung (100) integrierten Sensor zum Empfangen von von der ersten Wiedergabevorrichtung (360) wiedergegebenen Daten (514) an einem zweiten Ende (460) des ersten Wiedergabepfads (430) und
ein Kalibrierungsmodul (185), das dafür konfiguriert ist, die empfangenen Daten (514) mit den Testdaten (520) zu vergleichen, um eine Eigenschaft des ersten Wiedergabepfads (430) relativ zu einer Eigenschaft des zweiten Wiedergabepfads (435) zu bestimmen, wobei der zweite Wiedergabepfad (435) der Wiedergabe eines zweiten Datenstroms (311) dient, der komplementär zu dem ersten Datenstrom (312) ist,
wobei das Kalibrierungsmodul (185) ferner dafür konfiguriert ist, die mobile Vorrichtung (100) so zu konfigurieren, dass die Eigenschaft des ersten Wiedergabepfads (430) relativ zu dem zweiten Wiedergabepfad (435) kompensiert wird.

10. Vorrichtung für mobile Kommunikation (100) nach Anspruch 9,
wobei mindestens eines der Folgenden zutrifft;
a. das Kalibrierungsmodul (185) umfasst eine Kalibrierungssteuereinrichtung (513);
b. das Kalibrierungsmodul (185) umfasst einen Signaldetektor (512) zur Identifizierung eines vorbestimmten Signals in den empfangenen Daten (514), das relevant für die Eigenschaft des ersten Wiedergabepfades (430) ist; und
c. das Kalibrierungsmodul (185) ist dafür konfiguriert, die Testdaten (520) an dem Multimedia-Wiedergabemodul (183) als den mindestens einen Datenstrom (312) einzuführen.

11. Vorrichtung für mobile Kommunikation (100) nach Anspruch 9 oder 10, wobei die Eigenschaft ein Merkmal ist, das aus einer Gruppe ausgewählt ist, die aus einer Verarbeitungsverzögerungszeit des ersten Wiedergabepfads (430) und einer Signalverschlechterung, die entlang dem ersten Wiedergabepfad (430) auf die Testdaten (520) aufgebracht wird, besteht.

12. Vorrichtung für mobile Kommunikation (100) nach Anspruch 11, wobei die mobile Vorrichtung (100) der Beschleunigung der Übertragung der Daten (312) von der mobilen Vorrichtung (100) um ein Ausmaß dient, das gleich einer Verarbeitungsverzögerungszeit des ersten Wiedergabepfads (430) ist, unter der Steuerung des Kalibrierungsmoduls (185).

13. Vorrichtung für mobile Kommunikation (100) nach einem der Ansprüche 9 bis 12, wobei einer des ersten Datenstroms (312) und des zweiten Datenstroms (311) Audiodaten umfasst und der andere des ersten Datenstroms (312) und des zweiten Datenstroms (311) Videodaten zur gleichzeitigen Wiedergabe mit den Audiodaten umfasst.

14. Vorrichtung für mobile Kommunikation (100) nach einem der Ansprüche 9 bis 13, wobei der erste Datenstrom (311) von der ersten Wiedergabevorrichtung (360) wiedergegeben wird und der zweite Datenstrom von einer zweiten Wiedergabevorrichtung (350) wiedergegeben wird.

15. Computerprogrammprodukt, das umfasst:
ein computerlesbares Medium (130, 135, 140, 190) und
auf dem computerlesbaren Medium (130, 135, 140, 190) gespeicherte computerlesbare und computerausführbare Anweisungen in einem Kalibrierungsmodul (185) zur Ausführung durch eine zentrale Verarbeitungseinheit (105) einer Vorrichtung für mobile Kommunikation (100) zur Umsetzung der Aktionen des Verfahrens nach einem der Ansprüche 1 bis 8.

## Revendications

1. Procédé d'étalonnage de lecture multimédia comprenant un module d'étalonnage (185) fonctionnant sur un dispositif de communication mobile (100) pour amener le dispositif mobile (100) à effectuer les actions consistant à :
introduire (710) des données de test (520) à une première extrémité (340), dans le dispositif mobile (100), d'un premier trajet de lecture (430), le premier trajet de lecture (430) pour la lecture d'un premier flux de données (312) ;
recevoir (720) des données (514), lues par un premier dispositif de lecture (360) à une seconde extrémité (460) du premier trajet de lecture (430), au niveau d'un capteur (121) faisant partie intégrante du dispositif mobile (100) ;
comparer (730) les données reçues (514) aux données de test (520) pour déterminer une caractéristique du premier trajet de lecture (430) par rapport à une caractéristique d'un second trajet de lecture (435), le second trajet de lecture (435) pour la lecture d'un second flux de données (311), complémentaire au premier flux de données (312) ; et
configurer (740) le dispositif mobile (100) et compenser la caractéristique du premier trajet de lecture (430) par rapport au second trajet de lecture (435).

2. Procédé selon la revendication 1, dans lequel le premier trajet de lecture (430) comprend un trajet de signal s'étendant entre un composant (330) du dispositif mobile (100) qui introduit les données de test (520) et un composant (410) du dispositif de lecture (360) qui sort les données de test (520).

3. Procédé selon la revendication 2, dans lequel le premier trajet de lecture (430) comprend une connexion sans fil entre le dispositif mobile (100) et le dispositif de lecture (360), dans lequel facultativement, la connexion sans fil est sélectionnée dans un groupe constitué par une connexion Bluetooth™ et une connexion infrarouge.

4. Procédé selon une quelconque revendication précédente, dans lequel l'action de configuration (740) comprend l'association de données concernant la caractéristique avec le dispositif de lecture.

5. Procédé selon une quelconque revendication précédente, dans lequel la caractéristique du premier trajet de lecture (430) est un temps de retard de traitement du premier trajet de lecture (430) et la caractéristique du second trajet de lecture (435) est un temps de retard de traitement du second trajet de lecture (435).

6. Procédé selon une quelconque revendication précédente, comprenant en outre l'action de compensation de la caractéristique du premier trajet de lecture (430) lors de la transmission de données (312) depuis le dispositif mobile (100) à la première extrémité (340) du premier trajet de lecture (430) pour la lecture à la seconde extrémité (460) de celui-ci par le dispositif de lecture (360).

7. Procédé selon une quelconque revendication précédente, dans lequel un du premier flux de données (312) et du second flux de données (311) comprend des données audio et l'autre du premier flux de données (312) et du second flux de données (311) comprend des données vidéo pour la lecture simultanée avec les données audio.

8. Procédé selon une quelconque revendication précédente, dans lequel le premier flux de données (312) est lu par le premier dispositif de lecture (360) et le second flux de données est lu par un second dispositif de lecture (350).

9. Dispositif de communication mobile (100) comprenant :
un boîtier portatif comprenant :
une unité centrale de traitement (105),
un module de lecteur multimédia (183) pour initier la lecture d'un premier flux de données (312) sur un premier dispositif de lecture (360),
des moyens de communication (145, 153, 155, 170) pour transférer le premier flux de données (312) du dispositif mobile (100) au premier dispositif de lecture (360) le long d'un premier trajet de lecture (430), le premier trajet de lecture (430) pour la lecture d'un premier flux de données (312) ;
une première extrémité (340), dans le dispositif mobile (100), du premier trajet de lecture (430) pour introduire des données de test (520),
un capteur faisant partie intégrante du dispositif mobile (100) pour recevoir des données (514) lues par le dispositif de lecture (360) à une seconde extrémité (460) du premier trajet de lecture (430), et
un module d'étalonnage (185) configuré pour comparer les données reçues (514) aux données de test (520) pour déterminer une caractéristique du premier trajet de lecture (430) par rapport à une caractéristique d'un second trajet de lecture (435), le second trajet de lecture (435) pour la lecture d'un second flux de données (311), complémentaire au premier flux de données (312),
le module d'étalonnage (185) en outre configuré pour configurer le dispositif mobile (100) pour compenser la caractéristique du premier trajet de lecture (430) par rapport au second trajet de lecture (435).

10. Dispositif de communication mobile (100) selon la revendication 9, dans lequel au moins un de ce qui suit s'applique ;
a. le module d'étalonnage (185) comprend un contrôleur d'étalonnage (513) ;
b. le module d'étalonnage (185) comprend un détecteur de signal (512) pour identifier un signal prédéterminé dans les données reçues (514) se rapportant à la caractéristique du premier trajet de lecture (430) ; et
c. le module d'étalonnage (185) est configuré pour introduire les données de test (520) au niveau du module de lecteur de média (183) comme le au moins un flux de données (312).

11. Dispositif de communication mobile (100) selon la revendication 9 ou la revendication 10, dans lequel la caractéristique est un attribut sélectionné dans un groupe constitué par un temps de retard de traitement du premier trajet de lecture (430) et une dégradation de signal communiquée aux données de test (520) le long du premier trajet de lecture (430).

12. Dispositif de communication mobile (100) selon la revendication 11, le dispositif mobile (100) destiné à accélérer la transmission des données (312) depuis le dispositif mobile (100) d'une quantité égale à un temps de retard de traitement du premier trajet de lecture (430) sous la direction du module d'étalonnage (185).

13. Dispositif de communication mobile (100) selon l'une quelconque des revendications 9 à 12, dans lequel un du premier flux de données (312) et du second flux de données (311) comprend des données audio et l'autre du premier flux de données (312) et du second flux de données (311) comprend des données vidéo pour la lecture simultanée avec les données audio.

14. Dispositif de communication mobile (100) selon l'une quelconque des revendications 9 à 13, dans lequel le premier flux de données (312) est lu par le premier dispositif de lecture (360) et le second flux de données est lu par un second dispositif de lecture (350).

15. Produit de programme informatique comprenant :
un support lisible par ordinateur (130, 135, 140, 190), et
stockées sur le support lisible par ordinateur (130, 135, 140, 190), des instructions lisibles par ordinateur et exécutables par ordinateur dans un module d'étalonnage (185), pour l'exécution par une unité centrale de traitement (105) d'un dispositif de communication mobile (100), pour mettre en oeuvre les actions de procédé selon l'une quelconque des revendications 1 à 8.
